# FASCICULE DE BREVET EUROPEEN

(11) **EP 0 581 696 B1**
(45) Date de publication et mention de la délivrance du brevet: **24.06.1998**
(21) Numéro de dépôt: 93420312.6
(22) Date de dépôt: 22.07.1993
(51) Int. Cl.: C04B 35/52

(54) **Matériau de friction en composite carbone-carbone à porosité divisée**
Kohlenstoff/Kohlenstoff Verbundstoffreibungsmaterial mit aufgeteilter Porosität
Carbon/carbon composite friction material with divided porosity

(30) Priorité: 23.07.1992 FR 9209331
(43) Date de publication de la demande: 02.02.1994
(73) Titulaire: LE CARBONE LORRAINE, 92400 Courbevoie (FR)
(72) Inventeur: Bommier, Christophe, F-75015 Paris (FR); Chareire, Jean-Louis, F-92300 Levallois-Perret (FR)
(74) Mandataire: Séraphin, Léon

(56) Documents cités:
- FR-A- 1 264 724
- FR-A- 2 544 661
- GB-A- 1 163 979
- GB-A- 2 004 855
- PATENT ABSTRACTS OF JAPAN vol. 13, no. 504 (C-653)13 novembre 1989 & JP-A-1203267
- DATABASE WPIL Week 9032, Derwent Publications Ltd., London, GB; AN 90-242217 & JP-A-2167859
- DATABASE WPIL Week 8836, Derwent Publications Ltd., London, GB; AN 88-252763 & JP-A-63182256

## Description

### DOMAINE DE L'INVENTION

L'invention concerne le domaine des matériaux de friction en composite carbone-carbone (C-C en abrégé).

### ART ANTERIEUR

Il existe déjà de très nombreuses sortes de matériaux composites C-C utilisés comme matériaux de friction, qui se distinguent les uns des autres soit par la matrice, soit par le substrat servant de renfort fibreux, soit par les deux.

D'une manière générale, le renfort fibreux peut se caractériser par de très nombreux paramètres, tels que par exemple, le type de fibre (origine de la fibre ex-PAN, ex-brai, à l'état préoxydé/carbonisé/graphitisé), tous les paramètres physiques relatifs aux fibres individuelles (longueur, diamètre,...), aux groupements de fibres individuelles en mèches (nombre de fibres individuelles par mèche), relatifs à l'arrangement des fibres individuelles ou des mèches sous forme de substrat tissé ou non-tissé, à l'arrangement des nappes de substrat tissé ou non-tissé, aux moyens de solidariser les nappes entre elles, tels que l'aiguilletage, etc....

La matrice carbonée, qui lie entre elles les fibres ou les mèches de carbone, est généralement obtenue par dépôt de carbone dans le substrat à l'état typiquement comprimé, soit par dépôt de pyrocarbone par DCPV (dépôt chimique en phase vapeur), par imprégnation de brai ou de résine et carbonisation, ou par une combinaison de ces deux méthodes.

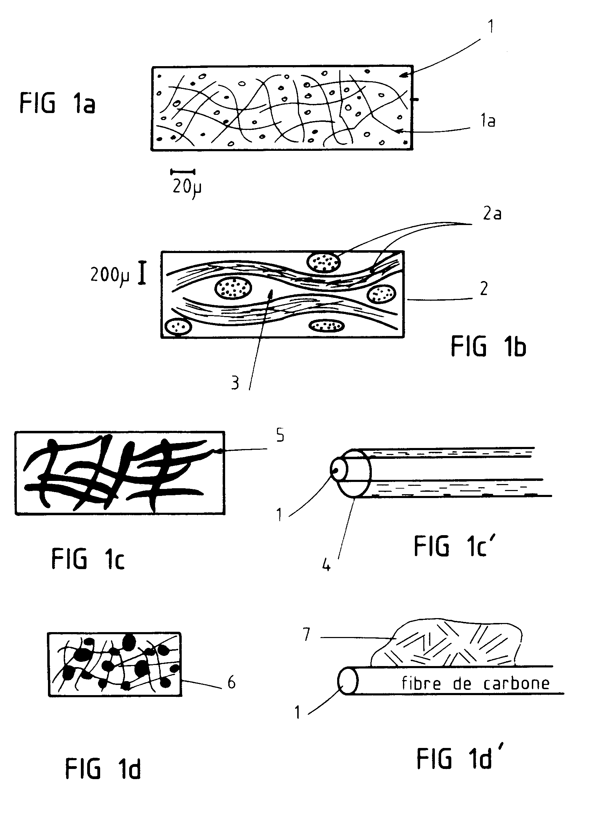

Selon la nature du substrat fibreux, on obtiendra un composite C-C à texture variable.
On utilise les termes "texture fine" ou "texture grossière" pour décrire respectivement :
- des composites C-C obtenus à partir d'un substrat fibreux comprimé, constitué par un mat de fibres individuelles, un feutre, avec une répartition homogène de fibres individuelles éventuellement coupées à faible longueur (< 0,5 mm). Dans ce cas, le substrat est si finement réparti qu'il n'y a pratiquement pas d'élément de volume cubique de dimensions supérieures ou égales à 100 µm.100µm.100µm ne contenant pas de fibre de carbone, que ce soit à l'intérieur du substrat à l'état comprimé ou dans le composite final. Voir figure 1a.
- des composites C-C obtenus à partir d'un substrat fibreux comprimé, constitué par des tissus de mèches de fibres de carbone, des répartitions aléatoires de segments de mèches (mèches coupées de longueur > 0,5 mm), chaque mèche renfermant au moins un millier de fibres individuelles. Dans ce cas, le substrat est réparti relativement grossièrement, de sorte qu'il y a beaucoup d'éléments de volume cubique de dimensions supérieures ou égales à 100 µm.100µm.100µm ne contenant pas de fibre de carbone, que ce soit à l'intérieur du substrat à l'état comprimé ou dans le composite final. Voir figure 1b.

L'homme du métier connaît déjà l'influence de la nature de la matrice sur les propriétés des composites C-C utilisés comme matériau de friction.

On connaît par la demande GB 2 004 855 des disques de frein en matériau carboné renforcé par des fibres et densifié par plusieurs dépôts DCPV successifs.

D'une manière générale, si l'on compare une densification de substrat par DCPV (formation de pyrocarbone, le plus souvent laminaire rugueux) ou par imprégnation avec une résine à taux de carbone élevé, on obtient, dans le cas de densification par DCPV, un dépôt de pyrocarbone sur les fibres, pyrocarbone très orienté, donc très graphitisable, conduisant à un composite C-C relativement conducteur de la chaleur, même en l'absence de traitement de graphitisation. Voir figure 1c.

Par contre, par imprégnation de résine suivie d'une carbonisation, on obtient un dépôt de carbone très désorienté, peu graphitisable, à répartition spatiale totalement différente de celle obtenue par DCPV, code cela apparaît sur la figure 1d. Les composites C-C ainsi obtenus sont mauvais conducteurs de la chaleur, même après graphitisation, car ils contiennent des particules de carbone dur peu graphitisable, bien liées au substrat fibreux, ce qui leur confère une bonne résistance à l'usure si on les lait frotter contre eux-mêmes.

Par ailleurs, l'utilisation de composites C-C comme matériau de friction implique, comme cela est connu de l'homme du métier, que le composite C-C possède les propriétés suivantes, par ordre d'importance :
- bonnes propriétés mécaniques, et en particulier, une bonne résistance au choc, le disque de frein étant un organe mécanique qui transmet un couple de freinage important - couple qui naît très brutalement en début de freinage.
- propriétés de friction satisfaisantes, en particulier, une grande stabilité du coefficient de friction au cours d'un même coup de frein.
- et bonne résistance à l'usure (il s'agit le plus souvent là d'un avantage économique).

### PROBLEME POSE

La demanderesse a observé que la mise au point d'un matériau de friction en composite C-C se heurtait à des influences contradictoires des facteurs opératoires, de sorte qu'il est difficile sinon impossible d'obtenir simultanément l'ensemble des propriétés souhaitées pour un matériau de friction.

Ainsi, en ce qui concerne l'influence de la texture du composite C-C, les propriétés mécaniques, et en particulier la tenue au choc d'un composite à texture grossière est meilleure que celle d'un composite à texture fine, par contre, la vitesse d'usure est généralement plus faible avec une texture fine.

De même, en ce qui concerne la nature de la matrice carbonée, une matrice en pyrocarbone conduit à un coefficient de frottement généralement plus stable qu'une matrice obtenue par imprégnation d'une résine. Par contre, du moins dans des conditions de freinage non-oxydant (température < 600°C), un composite à matrice pyrocarbone s'use plus vite qu'une matrice obtenue par imprégnation de résine.

Quant aux matrices mixtes obtenues en densifiant le substrat fibreux par DCPV et imprégnation, elles n'ont pas conduit, avec les méthodes connues de fabrication, à un composite C-C aux propriétés de friction améliorées.

La demanderesse a donc poursuivi ses recherches pour mettre au point un matériau composite C-C particulièrement adapté comme matériau de friction.

### DESCRIPTION DE L'INVENTION

Selon l'invention, le matériau en composite carbone-carbone comprend un substrat fibreux à base de fibres de carbone servant de renfort et une matrice en carbone comprenant du pyrocarbone, et est caractérisé en ce que,
a) ledit substrat fibreux présente une texture grossière à cavités de grande dimension dépassant 0,1 mm² de section,
b) ladite matrice comprend des couches carbonées d'enrobage dudit substrat fibreux en pyrocarbone et une structure cellulaire carbonée divisant lesdites cavités de grande dimension, de manière à former des cavités à porosité ouverte et de petites dimensions, c'est-à-dire de section inférieure à 0,1 mm².

La demanderesse a observé qu'il était essentiel, pour atteindre les objectifs de la présente demande :
- d'une part, de partir d'un substrat à texture grossière, afin de conférer au composite C-C final des performances mécaniques élevées, notamment une tenue au choc (résilience) élevée,
- d'autre part, de réaliser une première densification partielle par DCPV, de manière à lier mécaniquement le substrat fibreux, tout en laissant subsister des porosités ouvertes de grandes dimensions,
- enfin, de diviser ces porosités ouvertes de grandes dimensions en formant une structure cellulaire carbonée constituée par un support en matière carbonée revêtu de pyrocarbone, ce dernier point étant particulièrement important pour atteindre les objectifs de l'invention, et constituant un moyen essentiel de l'invention.

### DESCRIPTION DES FIGURES

Les figures 1a et 1b sont de schémas qui représentent respectivement un substrat à texture fine (1) constitué d'un enchevêtrement de fibres de carbone (1a), un substrat à texture grossière (2) (tissu de mèches (2a) de fibres de carbone) présentant des cavités (3) de grande dimension.

La figure 1c et 1c' représentent un composite C-C (5) obtenu par dépôt de pyrocarbone, la figure 1c' montrant que le dépôt de pyrocarbone se fait par dépôt de couches successives de pyrocarbone à la surface des fibres de carbone.

Les figures 1d et 1d' représentent un composite C-C (6) obtenu par imprégnation de résine et carbonisation. Dans ce cas, il se forme des particules de carbone "accrochées" aux fibres et réparties dans le substrat fibreux.

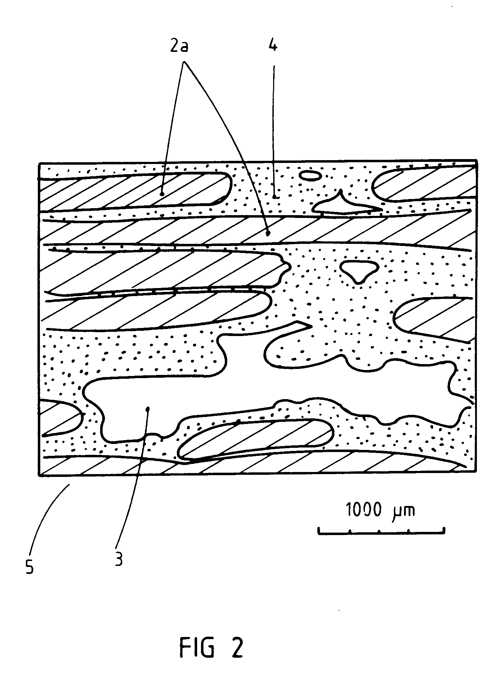

La figure 2 est un schéma correspondant à une photographie d'une coupe du composite (5) ayant servi à réaliser tous les essais selon l'invention et constitué d'un substrat à texture grossière formé de mèches (2a), recouvertes de couches de pyrocarbone (4). Sur cette coupe, on peut observer une cavité (3) de grande dimension, de longueur supérieure à 3 mm.

La figure 3 représente un composite C-C selon l'invention et est un schéma correspondant à une photographie d'une coupe du composite (5) après formation de ladite structure cellulaire qui conduit à la formation de cavités (9) de petites dimensions :
Le substrat de mèches (2a) est représenté hachuré, l'ensemble du pyrocarbone (40) formant les couches carbonées d'enrobage est représenté en pointillés, alors que les parois (8) de ladite structure cellulaire en pyrocarbone sont représentées par des croix. Ces parois ont une partie centrale (coeur), représenté par un trait continu (10) correspondant au support initial constitué de particules carbonées plus ou moins liées sur lequel est déposé le pyrocarbone.

### DESCRIPTION DETAILLEE DE L'INVENTION

Selon l'invention, les parois (8) de ladite structure cellulaire comprennent, à coeur, un matériau carboné non-orienté, et, en surface, un matériau orienté de type pyrocarbone qui est raccordé aux dites couches d'enrobage (40).

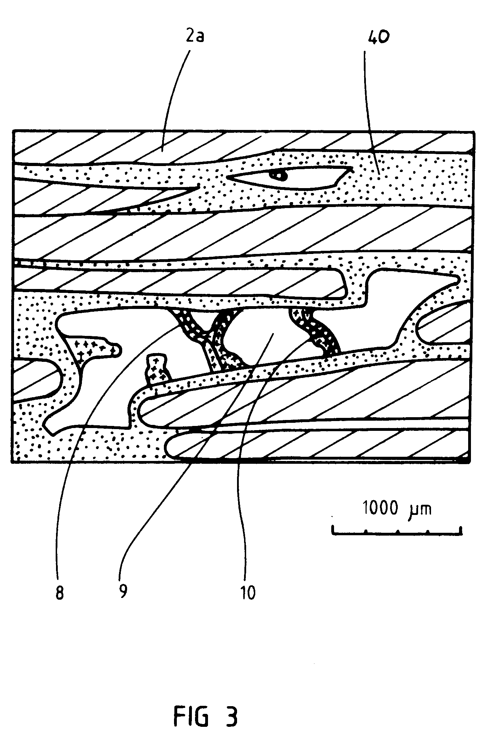

La figure 3 illustre bien la structure des parois selon l'invention : le coeur (10) en matériau carboné non-orienté représente, en pourcentage pondéral ou volumique, une faible partie de la paroi (8) constituée pour l'essentiel par du pyrocarbone.
Pour la clarté, on a représenté, sur la figure 3, de manière distincte le pyrocarbone (40) (en pointillés) enrobant le substrat à texture grossière (2a) et le pyrocarbone des parois (8) (avec des croix), mais en fait, il n'y a bien sûr aucune discontinuité entre les couches de pyrocarbone formant les parois et les couches superficielles de pyrocarbone qui enrobent le substrat à texture grossière, comme cela apparaît si l'on se réfère au procédé de fabrication :
Schématiquement, et comme cela sera décrit dans la suite plus complètement, le pyrocarbone (40) enrobant le substrat à texture grossière selon l'invention est déposé en deux fois, une première fois lors d'une densification initiale dudit substrat fibreux (référence (4) pour ce pyrocarbone), une seconde fois, après formation dudit matériau carboné non-orienté (10) lors de la formation de ladite structure cellulaire. On comprend donc que le pyrocarbone formant lesdites parois (8) soit, avec le procédé de l'invention, nécessairement raccordé au pyrocarbone enrobant ledit substrat fibreux.

Selon l'invention, ledit matériau, à coeur, non-orienté résulte de la carbonisation d'une résine riche en carbone, ou d'un brai, ou d'un hydrocarbure lourd, ou d'une matière filmogène.
Le matériau composite C-C selon l'invention, avec sa dite structure cellulaire, présente la composition (% volumique) suivante :

| | | |
|---|---|---|
| - substrat fibreux | entre 20 et 40 % vol. | |
| - enrobage de pyrocarbone (40) | 40 | 60 |
| - structure cellulaire carbonée | 5 | 20 |
| - porosité résiduelle | 5 | 15 |

Selon l'invention, ledit substrat fibreux (2a) à texture grossière est constitué de mèches de fibres de carbone contenant plus de 1000 filaments, sous forme soit de tissus, soit de mèches coupées à longueur supérieure à 3 mm et réparties aléatoirement, les intersections de mèches ou leur empilement conduisant à des porosités de section au moins égale à 10⁻¹ mm².

Les couches d'enrobage (40) en pyrocarbone ont une épaisseur comprise entre 50 et 100 µm.
Les parois carbonées transversales qui forment ladite structure cellulaire, et qui divisent les dites cavités de grande dimension, ont une épaisseur comprise entre 10 et 60 µm et conduisent à la formation de cavités de petite dimension qui présentent, en coupe, une section moyenne comprise entre 10⁻² et 10⁻¹ mm².

Selon les conditions d'utilisation en freinage, le matériau selon l'invention sera ou non graphitisé.

Un autre objet de l'invention est un procédé de fabrication d'un matériau composite carbone-carbone (C-C) par densification d'un substrat fibreux de fibres de carbone ou précurseur de fibres de carbone, comprenant une étape de densification par formation de carbone pyrolytique, et caractérisé en ce que :
a) on choisit un substrat fibreux à texture grossière, et on le comprime de manière à obtenir un taux volumique de substrat compris entre 20 et 40 %,
b) on densifie partiellement par dépôt de pyrocarbone sur ledit substrat fibreux à texture grossière de manière à former des couches de pyrocarbone enrobant le substrat fibreux et à assurer ainsi une forte cohésion du substrat fibreux, et à former un composite C-C à taux volumique de pyrocarbone compris entre 40 et 60% et comprenant des cavités oblongues de grandes dimensions, de section au moins égale à 0,1 mm², à porosité ouverte.
c) on forme une structure cellulaire par une première imprégnation du matériau obtenu en b) par une solution diluée d'une matière choisie parmi le groupe formé par une résine riche en carbone, un brai, un hydrocarbure lourd, ou une matière filmogène, puis, après polymérisation et/ou carbonisation de ladite matière, par un dépôt de pyrocarbone assurant la liaison avec lesdites couches de pyrocarbone, avec un taux volumique compris entre 5 et 20 %, de manière à subdiviser lesdites cavités de grande dimension et à obtenir un composite C-C rigide ayant des cavités de petites dimensions, c'est-à-dire de section inférieure à 0,1 mm², et à porosité ouverte comprise entre 5 et 15 % (%v).

A l'étape c) du procédé, on forme le coeur de ladite structure cellulaire par imprégnation du composite C-C obtenu à l'étape b) avec une solution liquide diluée, de préférence aqueuse, d'une matière apte à former, après élimination des éléments volatils de ladite solution liquide et carbonisation, des arrangements de matière, typiquement bidimensionnels, analogues à une paroi d'épaisseur faible, épaisseur typiquement inférieure à 1 µm.

La matière utilisée à l'étape c) est choisie parmi les matières polymériques organiques, d'origine naturelle ou synthétique, de préférence solubles dans l'eau.

Comme déjà indiqué, on forme à l'étape c) du procédé une structure cellulaire dont les parois sont constituées pour l'essentiel par du pyrocarbone et d'épaisseur comprise entre 10 et 60 µm, parois qui se raccordent solidairement aux couches de pyrocarbone enrobant le substrat fibreux.

Selon les applications, en particulier lorsque les conditions de freinage élèvent la température des matériaux de friction au-delà de 600°C pendant un temps relativement long, on peut soumettre ledit composite C-C obtenu à l'étape c) du procédé à un traitement de graphitisation.

### EXEMPLES

On a décrit 3 essais comparatifs. Les essais 1 et 2 ont été réalisés selon l'art antérieur et l'essai 3 selon l'invention. Tous les essais 1 à 3 ont été réalisés à partir d'un même matériau composite C-C de base obtenu de la manière suivante :
- on a fabriqué un substrat fibreux en coupant des mèches, constituées de 3000 filaments de fibre de carbone ex-PAN, à une longueur de 40 mm, de manière à obtenir une répartition aléatoire de mèches principalement orientées dans des plans horizontaux, puis en comprimant les mèches coupées de manière à atteindre un taux volumique de fibres de 30 %.
A ce stade, le substrat fibreux est caractérisé par des porosités très grossières (présence de cavités de grande dimension dépassant 0,1 mm² de section).
- on a densifié partiellement le substrat fibreux ainsi préparé (maintenu comprimé) par dépôt de pyrocarbone jusqu'à obtention d'un matériau de densité 1,65. Ceci correspond en pratique à un dépôt autour des mèches d'une épaisseur de pyrocarbone de l'ordre de 50 µm. Cette épaisseur est petite si on la compare aux dimensions des cavités de grande dimension, cavités oblongues, typiquement de 1 mm de longueur ou plus pour 0,2 mm de largeur, de sorte que la taille des cavités de grande dimension présentes dans le substrat n'est pas substantiellement diminuée par la densification partielle.
   On a ainsi obtenu le composite C-C de base ayant servi aux essais 1 à 3.

### EXEMPLE 1

On a poursuivi la densification du composite C-C de base par dépôt de pyrocarbone supplémentaire pour obtenir une densité de 1,75.
On a obtenu un composite C-C (essai 1) analogue au composite C-C de base, avec seulement des couches d'enrobage de pyrocarbone un peu plus épaisses.
Le matériau obtenu, de densité 1,75, a, en dernier lieu, subi un traitement thermique à 2400°C.

### EXEMPLE 2

On a imprégné le composite C-C de base avec un brai puis on a carbonisé l'ensemble.
On a obtenu un composite C-C de densité de 1,75 (essai 2) et on a observé que les cavités initiales de grande dimension contenaient de grosses particules de carbone dur, sans liaison avec les couches d'enrobage en pyrocarbone.
Comme pour le matériau de l'exemple 1, un traitement thermique final à 2400°C a été réalisé sur le matériau.

### EXEMPLE 3

On a imprégné le composite C-C de base avec une solution aqueuse diluée de résine phénolique à 10% en poids.
Après évaporation de l'eau, polymérisation à la température ambiante et carbonisation, on a obtenu un composite C-C dans lequel les cavités initiales de grande dimension contenaient de petites particules carbonées plus ou moins liées entre elles selon un arrangement à caractère bidimensionnel (10) (coeur de la structure cellulaire) qui divisait lesdites cavités initiales de grande dimension.
On a effectué ensuite un deuxième dépôt de carbone (pyrocarbone) par voie gazeuse sur l'ensemble des surfaces accessibles, y compris donc sur ledit arrangement à caractère bidimensionnel (coeur), de manière à former une structure cellulaire, à parois (8) (coeur revêtu de pyrocrabone) liées aux parois des cavités initiales de grande dimensions.

Typiquement, les parois de la structure cellulaire ont une épaisseur de 40 µm (grande majorité de pyrocarbone) et sont parfaitement raccordées aux couches de pyrocarbone qui recouvrent les mèches, de sorte que la porosité grossière du composite C-C de départ a été remplacée par une porosité fine (cellulaire) mais toujours ouverte.
On obtient ainsi un composite C-C "cloisonné", ayant une densité de 1,75 (essai 3).
Comme pour les exemples 1 et 2, le matériau obtenu a subi un traitement thermique final à 2400°C.

### CARACTERISATION DES COMPOSITES C-C PREPARES

Des disques de (rein (diamètre 120/100 mm) ont été fabriqués à partir de chaque composite C-C des exemples 1 à 3.

Conditions d'essai :
2 disques (même composite C-C) frottant l'un contre l'autre sont utilisés pour arrêter un volant d'inertie (3,5 kg.m²) sous différentes conditions de vitesse et de pression à l'interface des deux disques (simulation de freinage) :

| conditions | nombre d'arrêts | vitesse | initiale pression |
|---|---|---|---|
| a | 100 | 1300 t/mn | 0,6 MPa |
| b | 100 | 3000 t/mn | 0,8 MPa |
| c | 100 | 3500 t/mn | 0,8 MPa |
| d | 20 | 4000 t/mn | 1,5 MPa |
| e | 5 | 4500 t/mn | 2,1 MPa |

On a mesuré l'usure moyenne par face de disque et par arrêt. Les valeurs d'usure sont données sans unité : on donne arbitrairement la valeur d'usure 1 au disque de frein de l'essai 1 avec la condition d'essai "a", les autres valeurs d'usure étant proportionnelles.

| Conditions | N° d'essai | | |
|---|---|---|---|
| | 1 | 2 | 3 |
| a | 1 | 0,5 | 0,2 |
| b | 1,15 | 4 | 0,4 |
| c | 1,3 | 20 | 0,6 |
| d | 5 | - | 3 |
| e | 10 | - | 5 |

Ainsi, si l'on privilégie la recherche de faibles usures dans des conditions d'arrêt de faible énergie, qui sont de très loin les conditions les plus fréquentes rencontrées en service sur les avions, les freins selon l'invention (essai 3) sont très performants.

On peut noter que le frein de l'essai 2 présente un très bon comportement à l'usure à basse énergie, mais ces performances chutent très fortement et de manière rédhibitoire dès que l'énergie mise en jeu au freinage augmente (c'est à dire vers des niveaux d'énergie moins fréquents, mais non exceptionnels).
Selon une hypothèse avancée par la demanderesse, les très mauvaises performances des freins de l'essai 2 sur le plan de l'usure seraient à attribuer à la présence de grosses particules de carbone dur dans les cavités de grande dimension.
On voit, par opposition, l'avantage décisif que constitue la division des porosités grossières (cavités de grandes dimensions) conduisant à une porosité divisée par des parois, élément essentiel de l'invention qui la distingue de l'art antérieur.

En conclusion, ces essais montrent que l'invention combine les avantages des freins des essais 1 et 2 de l'art antérieur et permet d'obtenir de faibles usures à la fois dans le domaine des basses et hautes énergies de freinage, alors que l'art antérieur ne permettait que l'un ou l'autre.

En ce qui concerne les caractéristiques mécaniques, on a mesuré la résilience (mesure au mouton de Charpy) des matériaux composite C-C obtenus aux exemples 1 à 3. On a obtenu des valeurs voisines de résilience comprises entre 13 et 25 kJ/m².
Ces valeurs sont à comparer aux valeurs obtenues avec des essais réalisés comparativement aux essais 1 à 3, mais dans lesquels on a remplacé le substrat fibreux à texture grossière par un substrat fibreux à texture fine (mat de fibres individuelles). On a obtenu avec un substrat à texture fine des valeurs de résilience comprises entre 1 et 3 kJ/m², soit des valeurs typiquement 10 fois inférieures à celles obtenues avec un substrat à texture grossière.

En ce qui concerne la stabilité du coefficient de frottement durant le freinage, on a observé typiquement, avec le matériau composite C-C de l'exemple 3 selon l'invention, d'une part un rapport de 1,3 à 1,5 entre le coefficient maximum et le coefficient moyen, au cours d'un même freinage, et d'autre part, une variation du coefficient moyen de frottement d'un facteur 1,8 entre les conditions "a" et "e".
Par contre, avec les matériaux des essais 1 et 2, selon l'art antérieur, on a observé un rapport de 1,5 entre le coefficient maximum et le coefficient moyen, au cours d'un même freinage, mais une variation considérable (x 2,3) entre les conditions "a" et "e".

On a aussi réalisé des essais comparatifs aux essais 1 à 3, mais sans traitement thermique au-delà de 1600°C. Dans ce cas, on a noté, dans des conditions de freinage à faible énergie, une stabilité plus grande du coefficient de frottement dans le cas des matériaux de friction selon l'invention. Par contre, lorsqu'ils sont utilisés dans des conditions de freinage à haute énergie, tous ces matériaux (essais 1 à 3 mais non traités thermiquement) présentent de très fortes usures.

En conclusion, par comparaison avec l'art antérieur, les freins obtenus selon l'invention offrent une bonne résistance à l'usure dans une gamme très large d'énergie, avec des écarts de coefficient de frottement faibles entre conditions de freinage à haute et basse énergie et avec une bonne stabilité de couple au cours d'un même freinage, ensemble de performances qui n'était pas accessible avec les produits et procédés de l'art antérieur.

### AVANTAGES DE L'INVENTION

Outre les avantages liés à la performance des matériaux de friction en composite C-C selon l'invention, avantages mentionnés précédemment, l'invention présente aussi des avantages sur le plan du procédé de fabrication.
En effet, d'une part il est particulièrement avantageux de pouvoir fabriquer un matériau de friction uniquement en utilisant un substrat à texture grossière, car la densification partielle initiale par dépôt de pyrocarbone sur un substrat à texture grossière est particulièrement économique, l'accessibilité au coeur du substrat étant très bonne (existence de cavités de grande dimension) et autorisant des vitesses de dépôt de pyrocarbone élevées sans risque de croûtage des surfaces et création de gradients de densité très importants entre la surface et le coeur du matériau.

D'autre part, la préexistence d'un support divisé (10) (coeur), lors du second dépôt de pyrocarbone destiné à former les parois de ladite structure cellulaire, assure une surface spécifique très grande favorisant une prise de masse rapide (formation de pyrocarbone), typiquement 2 fois plus rapide qu'en l'absence de support divisé (10) formant ledit coeur.

## Revendications

1. Matériau en composite carbone-carbone comprenant un substrat fibreux à base de fibres de carbone servant de renfort et une matrice en carbone comprenant du pyrocarbone, caractérisé en ce que,
a) ledit substrat fibreux présente une texture grossière à cavités de grande dimension dépassant 0,1 mm² de section,
b) ladite matrice comprend des couches carbonées d'enrobage dudit substrat fibreux en pyrocarbone et une structure cellulaire carbonée divisant lesdites cavités de grande dimension, de manière à former des cavités à porosité ouverte et de petites dimensions, c'est-à-dire de section inférieure à 0,1 mm².

2. Matériau selon la revendication 1 dans lequel les parois de ladite structure cellulaire comprennent, à coeur, un matériau carboné non-orienté, et, en surface, un matériau orienté de type pyrocarbone qui est raccordé aux dites couches d'enrobage.

3. Matériau selon la revendication 2 dans lequel ledit matériau, à coeur, non-orienté résulte de la carbonisation d'une résine riche en carbone, ou d'un brai, ou d'un hydrocarbure lourd, ou d'une matière filmogène.

4. Matériau selon une quelconque des revendications 1 à 3 de composition (% volumique) telle que :
| | | |
|---|---|---|
| - substrat fibreux | entre 20 et 40 % vol. | |
| - enrobage de pyrocarbone | 40 | 60 |
| - structure cellulaire carbonée | 5 | 20 |
| - porosité résiduelle | 5 | 15 |

5. Matériau selon une quelconque des revendications 1 à 4 dans lequel ledit substrat fibreux à texture grossière est constitué de mèches de fibres de carbone contenant plus de 1000 filaments, sous forme soit de tissus, soit de mèches coupées à longueur supérieure à 3 mm et réparties aléatoirement, les intersections de mèches ou leur empilement conduisant à des porosités de section au moins égale à 10⁻¹ mm².

6. Matériau selon la revendication 5 dans lequel lesdites couches d'enrobage ont une épaisseur comprise entre 50 et 100 µm, et les parois de ladite structure cellulaire ont une épaisseur comprise entre 10 et 60 µm.

7. Matériau selon la revendication 6 dans lequel ladite cavité de petite dimension présente, en coupe, une section moyenne comprise entre 10⁻² et 10⁻¹ mm².

8. Matériau selon une quelconque des revendications 1 à 7 dans lequel ladite matrice en carbone est graphitisée.

9. Procédé de fabrication d'un matériau composite carbone-carbone (C-C) par densification d'un substrat fibreux de fibres de carbone ou précurseur de fibres de carbone, comprenant une étape de densification par formation de carbone pyrolytique (pyrocarbone), caractérisé en ce que :
a) on choisit un substrat fibreux à texture grossière, et on le comprime de manière à obtenir un taux volumique de substrat compris entre 20 et 40 %,
b) on densifie partiellement par dépôt de pyrocarbone sur ledit substrat fibreux à texture grossière de manière à former des couches de pyrocarbone enrobant le substrat fibreux et à assurer ainsi une forte cohésion du substrat fibreux, et à former un composite C-C à taux volumique de pyrocarbone compris entre 40 et 60% et comprenant des cavités oblongues de grandes dimensions, de section au moins égale à 0,1 mm²_{,} à porosité ouverte.
c) on forme une structure cellulaire par une première imprégnation du matériau obtenu en b) par une solution diluée d'une matière choisie parmi le groupe formé par une résine riche en carbone, un brai, un hydrocarbure lourd, ou une matière filmogène, imprégnation, puis, après polymérisation et/ou carbonisation de ladite matière, par un dépôt de pyrocarbone assurant la liaison avec lesdites couches de pyrocarbone, avec un taux volumique compris entre 5 et 20 %, de manière à subdiviser lesdites cavités de grande dimension et à obtenir un composite C-C rigide ayant des cavités de petites dimensions, c'est-à-dire de section inférieure à 0,1 mm², et à porosité ouverte comprise entre 5 et 15 % (%v).

10. Procédé selon la revendication 9 dans lequel on soumet ledit matériau composite C-C à un traitement de graphitisation.

## Claims

1. A carbon-carbon composite material comprising a fibrous substrate with a carbon fibre base which acts as a reinforcement and a carbon matrix comprising pyrocarbon, characterised in that,
a) said fibrous substrate has a coarse texture with large sized cavities of a section in excess of 0.1 mm²;
b) said matrix comprises carbon based coating layers of said fibrous substrate of pyrocarbon and a carbon based cellular structure dividing said large sized cavities, in such a way as to form small sized open porosity cavities, that is to say of a section of less than 0.1 mm².

2. A material according to Claim 1, wherein the walls of said cellular structure comprise, in their core, a non-oriented carbon based material, and, at the surface, an oriented material of the pyrocarbon type which is joined to said coating layers.

3. A material according to Claim 2, wherein said non-oriented material, at its core, results from the carbonation of a carbon-rich resin or a pitch or a heavy hydrocarbon or a film-forming substance.

4. A material according to any one of Claims 1 to 3 of a composition (% by volume) such that:
| | | |
|---|---|---|
| - fibrous substrate | between 20 and 40 % vol. | |
| - pyrocarbon coating | 40 | 60 |
| - carbon based cellular structure | 5 | 20 |
| - residual porosity | 5 | 15 |

5. A material according to any one of Claims 1 to 4, wherein said fibrous substrate with a coarse texture is constituted by carbon fibre roves containing more than 1000 filaments either in the form of fabrics, or in the form of roves cut to lengths greater than 3 mm and distributed at random, the intersections of the roves or accumulations of them resulting in porosities of a section which is at least equal to 10⁻¹ mm².

6. A material according to Claim 5, wherein said coating layers are between 50 and 100 µm in thickness, and the walls of said cellular structure are between 10 and 60 µm in thickness.

7. A material according to Claim 6, wherein said small sized cavity, in section, has a mean profile of between 10⁻² and 10⁻¹ mm².

8. A material according to any one of Claims 1 to 7, wherein said carbon matrix is graphited.

9. A process for manufacturing a carbon-carbon (C-C) composite material by densifying a fibrous substrate of carbon fibres or of a carbon fibre forerunner, comprising a step for densifying by formation of pyrolytic carbon (pyrocarbon), characterised in that:
a) a fibrous substrate of coarse texture is selected and compressed in such a way as to obtain a voluminal rate of substrate of between 20 and 40%,
b) densifying partly by depositing pyrocarbon on said fibrous substrate of coarse texture in such a way as to form pyrocarbon layers coating the fibrous substrate and in such a way as to thereby ensure sound cohesion of the fibrous substrate, and in such a way as to form a C-C composite with a pyrocarbon voluminal rate of between 40 and 60% and comprising large sized oblong cavities of a section of at least 0.1 mm², with open porosity
c) a cellular structure is formed by initially impregnating the material obtained in step b) with a solution which is diluted with a substance selected from the group formed by a carbon-rich resin, a pitch, a heavy hydrocarbon, or a film-forming substance, impregnation, and then, after polymerisation and/or carbonation of said substance, depositing the pyrocarbon to form a bond with said pyrocarbon layers, with a voluminal rate of between 5 and 20%, in such a way as to sub-divide said large sized cavities and to obtain a rigid C-C composite with small sized cavities, that is to say of a section of less than 0.1 mm², and with open porosity of between 5 and 15% (%v).

10. A process according to Claim 9, wherein said C-C composite material is subjected to a graphiting treatment.

## Patentansprüche

1. Kohlenstoff-Kohlenstoff-Verbundstoffmaterial mit einem faserigen Substrat auf der Basis von Kohlenstoff-Fasern, das der Verstärkung dient, und einer Kohlenstoffmatrize, die Pyrokohlenstoff enthält, dadurch gekennzeichnet, daß
a) das faserige Substrat eine grobe Textur mit großdimensionierten Hohlräumen aufweist, deren Querschnitt größer ist als 0,1 mm²,
b) die Matrize Kohlenstoffschichten aus Pyrokohlenstoff, die das faserige Substrat bedecken, und eine Kohlenstoffzellstruktur enthält, die die großdimensionierten Hohlräume so aufteilt, daß Hohlräume mit offener Porosität und kleinen Dimensionen gebildet werden, d.h. mit einem Querschnitt von kleiner als 0,1 mm².

2. Material nach Anspruch 1, bei dem die Wände der Zellstruktur im Innern ein nicht gerichtetes Kohlenstoffmaterial und an der Oberfläche ein gerichtetes Material vom Typ Pyrokohlenstofff enthalten, welches mit den Deckschichten verbunden ist.

3. Material nach Anspruch 2, bei dem das nicht gerichtete Material im Innern durch Verkohlung eines kohlenstoffreichen Harzes oder eines Pechs oder eines schweren Kohlenwasserstoffes oder eines filmbildenden Stoffes hergestellt wird.

4. Material nach einem der Ansprüche 1 bis 3 mit der Zusammensetzung (in VoL.-%):
| | |
|---|---|
| - Faseriges Substrat | 20 - 40 % |
| - Pyrokohlenstoff-Deckschicht | 40 - 60 % |
| - Kohlenstoffzellstruktur | 5 - 20 % |
| - Restporosität | 5 - 15 % |

5. Material nach einem der Ansprüche 1 bis 4, bei dem das faserige Substrat grober Textur aus Kohlenstoff-Faserbändern mit mehr als 1000 Fäden besteht und entweder in Form von Geweben oder in Form von Bändern vorliegt, welche auf eine Länge von mehr als 3 mm zugeschnitten und beliebig verteilt sind, wobei die Schnittpunkte der Bänder oder ihre Stapel zu Porositäten mit einem Querschnitt von mindestens 10⁻¹ mm² führen.

6. Material nach Anspruch 5, bei dem die Deckschichten eine Dicke von 50 bis 100 µm und die Wände der Zellstruktur ein Dicke von 10 bis 60 µm aufweisen.

7. Material nach Anspruch 6, bei dem der kleindimensionierte Hohlraum im Schnitt einen mittleren Querschnitt von 10⁻² bis 10⁻¹ mm² aufweist.

8. Material nach einem der Ansprüche 1 bis 7, bei dem die Kohlenstoffmatrize graphitisiert ist.

9. Verfahren zur Herstellung eines Verbundstoffmaterials aus Kohlenstoff-Kohlenstoff (C-C) durch Verdichtung eines faserigen Substrats aus Kohlenstoff-Fasern oder Kohlenstoff-Faser-Zwischenstoffen, mit einer Verdichtungsphase durch Bildung von pyrolytischem Kohlenstoff (Pyrokohlenstoff), dadurch gekennzeichnet, daß
a) ein faseriges Substrat grober Textur gewählt und so komprimiert wird, daß der Volumengehalt des Substrats 20 bis 40 % beträgt,
b) eine partielle Verdichtung durchgeführt wird, indem Pyrokohlenstoff auf das faserige Substrat grober Textur abgeschieden wird, so daß Pyrokohlenstoffschichten entstehen, die das faserige Substrat bedecken und somit eine starke Haftfestigkeit des faserigen Substrats gewährleistet wird, und ein C-C-Verbundstoff hergestellt wird mit einem Volumengehalt an Pyrokohlenstoff von 40 bis 60 % und großdimensionierten länglichen Hohlräumen von mindestens 0,1 mm² Querschnitt mit offener Porosität,
c) eine Zellstruktur gebildet wird, indem das in b) erhaltene Material einer ersten Imprägnierung mit einer verdünnten Lösung aus einem Stoff der Gruppe kohlenstoffreiches Harz, Pech, schwerer Kohlenwasserstoff oder filmbildender Stoff unterworfen wird, an die sich nach erfolgter Polymerisierung und/oder Verkohlung des Stoffes eine Imprägnierung mit einer Pyrokohlenstoffabscheidung mit einem Volumengehalt von 5 bis 20 % anschließt, die die Verbindung mit den Pyrokohlenstoffschichten sicherstellt, so daß die großdimensionierten Hohlräume aufgeteilt werden und ein starres C-C-Verbundstoffmaterial mit kleindimensionierten Hohlräumen, d.h. mit einem Querschnitt von kleiner als 0,1 mm², und mit offener Porosität von 5 bis 15 % (Vol.-%) erhalten wird.

10. Verfahren nach Anspruch 9, bei dem das C-C-Verbundstoffmaterial einer Graphitisierungsbehandlung unterworfen wird.
